# EUROPÄISCHE PATENTSCHRIFT

(11) **EP 1 375 969 B1**
(45) Veröffentlichungstag und Bekanntmachung des Hinweises auf die Patenterteilung: **14.06.2006**
(21) Anmeldenummer: 03009451.0
(22) Anmeldetag: 25.04.2003
(51) Int. Cl.: F16H 55/17, F16D 23/06, B21K 25/00, B23P 11/00

(54) **Verfahren zum Herstellen eines Getriebeelementes**
Method of manufacturing a transmission part
Procédé de fabrication d'un élément de transmission

(30) Priorität: 26.06.2002 DE 10229682
(43) Veröffentlichungstag der Anmeldung: 02.01.2004
(73) Patentinhaber: GETRAG Getriebe- und Zahnradfabrik Hermann Hagenmeyer GmbH & Cie KG, 74199 Untergruppenbach (DE)
(72) Erfinder: Lang, Claus-Hermann, Dr., 88213 Ravensburg (DE)
(74) Vertreter: Steil, Christian

(56) Entgegenhaltungen:
- EP-A- 0 563 949
- DE-A1- 10 007 168
- DE-C1- 4 228 055
- US-A- 3 678 557
- US-A- 3 750 489
- PATENT ABSTRACTS OF JAPAN Bd. 2000, Nr. 01, 31. Januar 2000 (2000-01-31) -& JP 11 280788 A (ISUZU MOTORS LTD), 15. Oktober 1999 (1999-10-15)

## Beschreibung

Die vorliegende Erfindung betrifft ein Verfahren zum Herstellen eines Getriebeelementes mit einem Zahnrad und einem Kupplungskörper, bei dem das Zahnrad und der Kupplungskörper mittels einer Umfangsverzahnung koaxial und drehfest miteinander verbunden werden, so daß sie an jeweiligen Radialschultern spielfrei aneinander anliegen, wobei eines der Bauteile von Zahnrad bzw. Kupplungskörper in einem den Radialschultern gegenüberliegenden Bereich in oder benachbart zu der Umfangsverzahnung eine Umfangsnut aufweist, in die ein Ringelement aus einem duktilen Material zur Axialsicherung verstemmt wird.

Ein derartiges Verfahren zum Herstellen eines Getriebeelementes ist aus der DE 42 28 055 C1 bekannt.

Bei Getrieben, insbesondere bei Stufengetrieben für Kraftfahrzeuge sind Getriebeelemente bekannt, die durch eine Baugruppe bestehend aus einem Zahnrad und einem Kupplungskörper, gebildet werden. Das Zahnrad kann dabei ein Losrad oder ein Schaltrad des Getriebes sein.

Für einen ordnungsgemäßen Betrieb eines derartigen Getriebeelementes ist es notwendig, daß das Zahnrad und der Kupplungskörper sowohl drehfest wie auch axial fest mit einander verbunden sind.

Bei einem ersten bekannten Getriebeelement wird dies dadurch erreicht, daß Kupplungskörper und Zahnrad einstückig ausgebildet sind. Dies hat jedoch den Nachteil, daß ein kompliziertes Bauelement gefertigt werden muß, das einen hohen Fertigungsaufwand erfordert.

Bei einer zweiten Art bekannter Getriebeelemente werden Kupplungskörper und Zahnrad als getrennte Bauelemente vorgefertigt und über zylindrische Flächen stoffschlüssig miteinander verbunden. Die drehfeste und axial feste Verbindung wird bei diesem bekannten Getriebeelement dadurch erreicht, daß man die beiden Elemente im Bereich ihrer zylindrischen Passung mittels eines Lasers verschweißt.

Diese bekannte Vorgehensweise hat jedoch den Nachteil, daß die beiden Bauteile des Getriebeelementes im ungehärteten Zustand, d.h. mit einem Kohlenstoffanteil von weniger als 0,3 % bis 0,5 % verarbeitet werden müssen, weil im gehärteten Zustand ein Schweißen nicht mehr möglich ist. Um eine innige Schweißverbindung herzustellen, bei der die beiden Bauteile so miteinander verbunden werden, daß auch hohe Drehmomente übertragen werden können, sind besondere Maßnahmen erforderlich. So wird auf der Stirnseite des Getriebeelementes im Bereich der zylindrischen Passung eine Ringnut vorgesehen. Mit dem Laserstrahl wird in diese Ringnut hineingeschweißt. Das ungehärtete Material wird dabei geschmolzen und verläuft ineinander. Dies geschieht nicht nur im Bereich der Ringnut selbst, sondern auch im Bereich des dahinterliegenden Ringspaltes der zylindrischen Passung zwischen den beiden Bauteilen. Die Schweißnaht geht daher axial durch und muß auch axial durchgehen, da die erwähnten hohen Drehmomente übertragbar sein müssen. Es ist daher für diesen Schweißvorgang eine hohe Energie erforderlich, wodurch die Bauteile wiederum sehr warm werden und sich aufgrund dessen eine unerwünschte Deformation der verschweißten Körper ergeben kann.

Bei einer dritten bekannten Art von Getriebeelementen werden Zahnräder mit Kupplungskörpern dadurch stoffschlüssig miteinander verbunden, daß man zur Verdrehsicherung wiederum eine Umfangsverzahnung vorsieht und die axiale Sicherung durch Widerstandsschweißen im Bereich der Stirnfläche herstellt. Dabei wird eine ringförmige Kupferelektrode unter Druck an die Fügestelle zwischen Zahnrad und Kupplungskörper gedrückt.

Nachteil dieser bekannten Vorgehensweise ist zunächst, daß die dazu benötigten Anlagen einen extrem hohen Stromverbrauch haben und die Elektroden einem hohen Verschleiß unterliegen. Ein weiterer wesentlicher Nachteil besteht darin, daß beim Widerstandsschweißen der Strom axial in die Zähne des Schaltrades hineinfließt und dann in Umfangsrichtung von den Flanken der Außenverzahnung am Schaltrad in die Flanken der Innenverzahnung am Kupplungskörper übertritt. Vom Kupplungskörper fließt der Strom dann wieder in axialer Richtung in eine Gegenelektrode. Die Verbindung wird daher im wesentlichen dadurch hergestellt, daß die Flanken der Verzahnungen von Zahnrad und Kupplungskörper sozusagen miteinander "verklebt" werden. Diese Verbindung ist jedoch nicht betriebsfest, weil die entstandenen "Klebestellen" dazu neigen, insbesondere bei Erschütterungen und Schwingungsbelastungen zu reißen, so daß die axiale Fixierung verloren geht und die Teile sich in Achsrichtung voneinander lösen können.

Bei einer vierten Variante bekannter Getriebeelemente (z.B. DE 195 13 992 A1) wird die drehfeste Verbindung zwischen Kupplungskörper und Zahnrad mittels einer Umfangsverzahnung erreicht, die vorzugsweise als Kurzverzahnung bzw. als Zahnwellenprofil ausgebildet ist. Dabei befindet sich üblicherweise die Innenverzahnung am Kupplungskörper und die Außenverzahnung am Zahnrad. Es ist jedoch auch eine umgekehrte Konfiguration denkbar, bei der sich die Innenverzahnung am Zahnrad und die Außenverzahnung am Kupplungskörper befindet.

Um die beiden Bauteile des Getriebeelementes zusätzlich axial zu sichern, wird die Außenverzahnung (bzw. die Innenverzahnung) des Schaltrades axial etwas länger ausgebildet und in dem axial vorstehenden Bereich mechanisch gegen die Innenverzahnung (bzw. die Außenverzahnung) des Kupplungskörpers verstemmt.

Diese Vorgehensweise hat jedoch den Nachteil, daß der Verstemmbereich ungehärtet gehalten werden muß, da nur das ungehärtete Material verstemmt werden kann. Man geht daher in diesem Fall so vor, den zu verstemmenden Bereich mit einer speziellen Abdeckmasse (z.B. Condorsal oder Conduron) abzudecken und die Teile in diesem Zustand durch den Härteofen zu führen. Dies wiederum hat den Nachteil, daß beim Aufkohlen und anschließenden Abschrecken die Abdeckmasse in die Ofenatmosphäre übergehen und diese verunreinigen kann.

Eine fünfte Art von bekanntem Getriebeelement wird dadurch hergestellt, daß eine schwimmende Lagerung des Kupplungskörpers an dem Zahnrad in axialer Richtung bereitgestellt wird. Der Kupplungskörper stützt sich dann axial an einem anderen Getriebeelement, z.B. einem Schaltmuffenträger, ab.

Diese Lösung ist nicht für alle denkbaren Getriebekonstruktionen geeignet.

Aus der eingangs genannten DE 42 28 055 C1 ist eine Lösung zur Axialsicherung zwischen zwei Bauteilen in einer Anordnung zur Sitzverstellung bekannt, wobei auf einem eine Mitnehmerverzahnung aufweisenden Achsabsatz ein Bauteil, wie beispielsweise ein Zahnrad, drehfest angeordnet und anschließend axial gesichert wird. Der Achsabsatz ist etwas länger als die Stärke des darauf anzuordnenden Bauteiles ausgebildet, wobei zwischen dem Achsabsatz und einem sich daran mit kleinerem Außendurchmesser anschließenden Zapfen eine Ringnut angeordnet wird. Anschließend wird ein Ring aus einem duktilen Material, dessen Innendurchmesser dem Außendurchmesser des Zapfens entspricht, auf den Zapfen gegen den Achsabsatz gepreßt. Dabei schneiden sich die gehärteten Zähne der Mitnehmerverzahnung des Achsabsatzes in dem dem Bauteil zugekehrten Bereich des Ringes ein und verdrängen durch ihr Volumen den entsprechenden Werkstoff des Ringes in die Ringnut hinein, um so das Bauteil in Axialrichtung festzulegen.

Diese bekannte Lösung hat den Nachteil, daß das Bauelement und der Ring axial verlierbar an dem Achsabsatz gelagert sind, bevor der Ring auf die Mitnehmerverzahnung aufgepreßt wird. Demzufolge ist eine Vormontage nicht möglich.

Der Erfindung liegt daher die Aufgabe zugrunde, ein Verfahren zum Herstellen eines Getriebeelementes anzugeben, welches die in diesem sehr umfangreichen Stand der Technik vorhandenen Nachteile vermeidet.

Diese Aufgabe wird bei dem eingangs genannten Verfahren zum Herstellen eines Getriebeelementes dadurch gelöst, daß das Ringelement zunächst in die Umfangsnut eingebracht wird, so daß es unverlierbar darin gehalten ist, und daß das Ringelement anschließend mittels eines Stemmwerkzeuges gegen das die Umfangsnut nicht aufweisende Bauelement verstemmt wird.

Bei dieser Lösung ist es möglich, nach dem axialen Ineinanderschieben von Zahnrad und Kupplungskörper zunächst das Ringelement in die Umfangsnut einzubringen, so daß es unverlierbar darin gehalten ist. Demzufolge kann das Ringelement nicht mehr abfallen und muß nicht separat gehandhabt werden, bevor der eigentliche Verstemmvorgang stattfindet.

Das Einbringen des Ringelementes kann mittels einer Spiel- oder einer Preßpassung erfolgen. Zu bevorzugen ist eine Spielpassung, um nach einer zwischenzeitlichen Qualitätsprüfung nötige Änderungen mit geringem Aufwand tätigen zu können.

Die Aufgabe wird auf diese Weise vollkommen gelöst.

Besonders bevorzugt ist es, wenn das Ringelement dann, wenn es unverlierbar in der Umfangsnut gehalten ist, auch das Zahnrad und den Kupplungskörper unverlierbar aneinander hält, bevor das Ringelement verstemmt wird.

Auf diese Weise bilden der Kupplungskörper, das Zahnrad und das Ringelement nach dem Einsetzen des Ringelementes in die Umfangsnut eine vormontierte Einheit.

Ferner ist es vorteilhaft, wenn das Ringelement ein offenes Ringelement ist, das zum Einbringen in die Umfangsnut aufgespreizt wird.

Hierdurch ist es leicht möglich, das Ringelement zunächst in die Umfangsnut mit Spiel einzusetzen, bevor der eigentliche Verstemmvorgang stattfindet.

Gemäß einer besonders bevorzugten Ausführungsform besitzt das Ringelement die Form eines Toroids.

Hierdurch wird das Aufschieben des Ringelementes und Einbringen in die Umfangsnut weiter erleichtert.

Von Vorteil ist es auch, wenn das Ringelement aus einem duktilen Werkstoff besteht, insbesondere aus 20 MoCrS4 oder einem ähnlichen Werkstoff.

Insgesamt ist es ferner bevorzugt, wenn die Umfangsnut mittels eines einzelnen Werkzeuges gleichzeitig mit einem Freistich am gegenüberliegenden Ende der Umfangsverzahnung eingestochen wird.

Hierdurch wird der Fertigungsaufwand zum Herstellen der Ringnut verringert, insbesondere dann, wenn ohnehin ein Freistich am Ende der Umfangsverzahnung im Bereich der Radialschultern vorzusehen ist.

Schließlich ist es vorteilhaft, wenn das Zahnrad und der Kupplungskörper gehärtet werden, bevor sie miteinander verbunden werden.

Dabei versteht sich, daß das Zahnrad und der Kupplungskörper durchgehend gehärtet werden können, ohne die Notwendigkeit des Aufbringens von Condorsal oder ähnlichen Beschichtungen vor dem Härten.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: in schematischer Form einen Axialschnitt durch ein erfindungsgemäßes Getriebeelement;
- Fig. 2: eine Detailansicht der Fig. 1 nach dem axialen Verbinden von Zahnrad und Kupplungskörper und nach dem Einsetzen eines Ringelementes in eine Umfangsnut vor einem Verstemmvorgang; und
- Fig. 3: eine der Fig. 2 entsprechende Darstellung nach dem Verstemmen des Ringelementes.

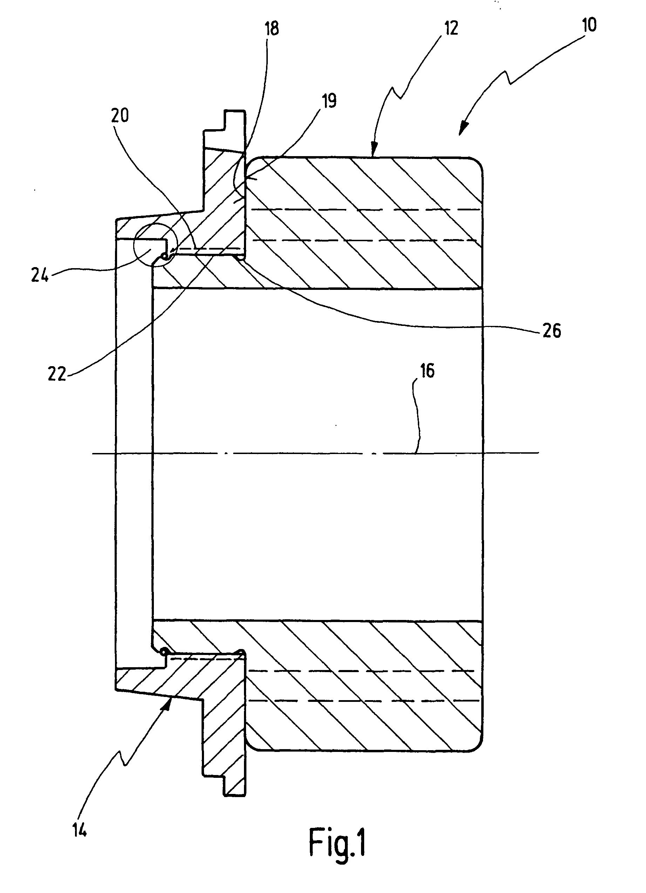

In Fig. 1 bezeichnet 10 ein Getriebeelement eines Kraftfahrzeug-Stufengetriebes. Das Getriebeelement 10 besteht im wesentlichen aus einem Schaltrad 12 und einem Kupplungskörper 14. Schaltrad 12 und Kupplungskörper 14 sind ineinander gefügt und zu einer gemeinsamen Achse 16 koaxial angeordnet.

Der Kupplungskörper 14 ist zu diesem Zweck axial auf das Schaltrad 12 aufgeschoben, bis es mit einer Radialschulter 19 an einer Radialschulter 18 des Schaltrades 12 anstößt.

Es sei an dieser Stelle erwähnt, daß das Getriebeelement 10 statt eines Schaltrades 12 auch ein entsprechendes Losrad aufweisen kann und/oder ein anderes koaxial zu der Achse 16 angeordnetes Getriebebauteil.

Am Kupplungskörper 14 ist eine Innenverzahnung 20 und am Schaltrad 12 eine dazu komplementäre Außenverzahnung 22 angebracht. Da die Verzahnungen 20, 22 beim Aufschieben des Kupplungskörper 14 auf das Schaltrad 12 ineinandergreifen, sind Schaltrad 12 und Kupplungskörper 14 drehfest miteinander verbunden, in diesem Zustand aber noch axial gegeneinander beweglich.

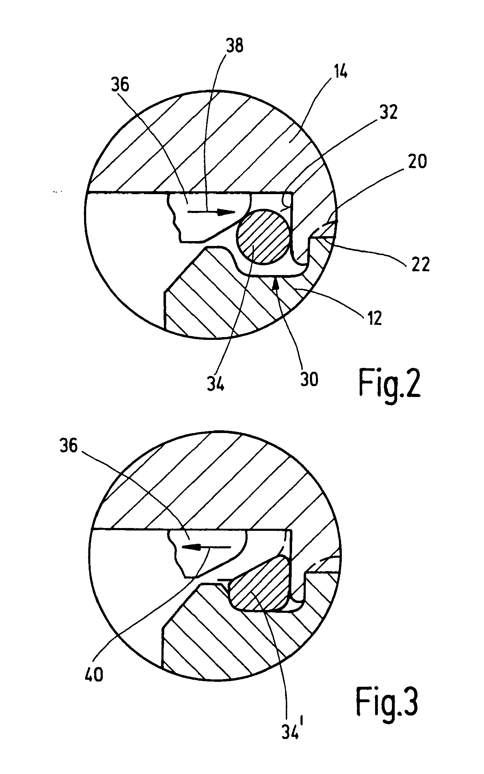

Um Schaltrad 12 und Kupplungskörper 14 axial gegeneinander zu fixieren, werden Maßnahmen ergriffen, wie sie anhand eines Ausschnitts 24 in Fig. 1 in vergrößerter Darstellung in Fig. 2 und Fig. 3 dargestellt sind.

In Fig. 1 ist ferner ein an sich bekannter Freistich 26 gezeigt, der im Bereich zwischen der Außenverzahnung 22 und der Radialschulter 18 vorgesehen ist.

Man erkennt in Fig. 2 zunächst den Zustand, bei dem der Kupplungskörper 14 auf das Schaltrad 12 aufgeschoben wurde.

An dem Schaltrad 12 ist eine Umfangsnut 30 vorgesehen, die benachbart zu der Umfangsverzahnung 20, 22 gegenüber den Schultern 18, 19 vorgesehen ist. Der Kupplungskörper 14 steht in axialer Richtung mit einer Radialschulter 32 gegenüber der Umfangsnut 30 vor.

In die Umfangsnut 30 ist ein Ringelement 34 eingesetzt, so daß es mit Spiel axial und radial unverlierbar darin gehalten ist.

Das Ringelement 34 liegt dabei in axialer Richtung mit Spiel zwischen der Radialschulter 32 des Kupplungskörper 14 und der gegenüberliegenden Flanke der Ringnut 30 des Schaltrades 12. Das Schaltrad 12, der Kupplungskörper 14 und das Ringelement 34 sind in diesem Zustand folglich unverlierbar aneinander festgelegt, wobei jedoch noch Spiel in Axialrichtung vorhanden ist.

Das Ringelement 34 ist ein offenes Ringelement aus einem duktilen Material, wie beispielsweise 20 MoCrS4, und läßt sich durch Aufspreizen relativ leicht in die Umfangsnut 30 einsetzen. Das Ringelement 34 besitzt die Form eines Toroids, hat also in der dargestellten Schnittdarstellung die Form eines Kreises. Alternativ könnte das Ringelement 34 beispielsweise im Schnitt auch viereckig, insbesondere quadratisch, sein. Ferner ist es auch denkbar, daß das Ringelement 34 ein geschlossenes Ringelement ist.

In dem in Fig. 2 gezeigten Zustand wird ein Verstemmwerkzeug 36 in axialer Richtung gegen das Ringelement 34 gepreßt, wie bei 38 gezeigt. Dabei wird das Ringelement 34 fest in die Ringnut 30 hinein verstemmt, so daß es sich schließlich, so wie es in Fig. 3 bei 34' gezeigt ist, in axialer Richtung sowohl an der Radialschulter 32 des Kupplungskörpers 14 als auch an der gegenüberliegenden Radialflanke der Umfangsnut 30 und in radialer Richtung an dem Grund der Umfangsnut 30 abstützt.

Anschließend wird das Verstemmwerkzeug 36 in axialer Richtung wieder zurückgezogen, wie es in Fig. 3 bei 40 gezeigt ist.

In diesem Zustand sind der Kupplungskörper 14 und das Schaltrad 12 in axialer Richtung aneinander fixiert.

Die Radialnut 30 kann gleichzeitig mit dem Freistich 26 mittels eines einzelnen Werkzeuges an dem Schaltrad 12 angebracht werden, obgleich dies in den Figuren nicht näher dargestellt ist.

Obgleich bei der vorgestellten Ausführungsform des erfindungsgemäßen Verfahrens zunächst das Ringelement 34 lose in die Umfangsnut 30 eingebracht wird, um eine vormontierte Einheit zwischen Schaltrad 12, Kupplungskörper 14 und Ringelement 34 zu bilden, ist es auch denkbar, das Ringelement 34 in einem Schritt mit dem Verstemmvorgang in die Ringnut 30 einzubringen, also das Ringelement 34 mittels des Verstemmwerkzeuges 36 zunächst in die Umfangsnut 30 zu schieben und anschließend gleich zu verstemmen.

Anstelle eines Ringelementes ist es auch denkbar, Segmente in Form von Pellets oder Kugeln kalt umzuformen. Ferner ist denkbar, statt eines vorgefertigten Ringelementes eine Flüssigkeit in die Ringnut 30 einzugießen, die anschließend aushärtet. Auch ist das Einbringen eines Sinterwerkstoffes denkbar, der anschließend einem Sintervorgang unterzogen wird.

## Patentansprüche

1. Verfahren zum Herstellen eines Getriebeelementes (10) mit einem Zahnrad (12) und einem Kupplungskörper (14), bei dem das Zahnrad (12) und der Kupplungskörper (14) mittels einer Umfangsverzahnung (20, 22) koaxial und drehfest miteinander verbunden werden, so daß sie an jeweiligen Radialschultern (18, 19) spielfrei aneinander anliegen, wobei eines der Bauteile von Zahnrad (12) bzw. Kupplungskörper in einem den Radialschultern (18, 19) gegenüberliegenden Bereich in oder benachbart zu der Umfangsverzahnung (20, 22) eine Umfangsnut (30) aufweist, in die ein Ringelement (34) aus einem duktilen Material zur Axialsicherung verstemmt wird,
**dadurch gekennzeichnet, daß**
das Ringelement (34) zunächst in die Umfangsnut (30) eingebracht wird, so daß es unverlierbar darin gehalten ist, und daß das Ringelement (34) anschließend mittels eines Stemmwerkzeuges (36) gegen das die Umfangsnut (30) nicht aufweisende Bauelement (14) verstemmt wird.

2. Verfahren nach Anspruch 1, **dadurch gekennzeichnet, daß** das Ringelement (34), wenn es unverlierbar in der Umfangsnut (30) gehalten ist, auch das Zahnrad (12) und den Kupplungskörper (14) unverlierbar aneinander hält, bevor das Ringelement (34) verstemmt wird.

3. Verfahren nach Anspruch 1 oder 2, **dadurch gekennzeichnet, daß** das Ringelement (34) ein offenes Ringelement (34) ist, das zum Einbringen in die Umfangsnut (30) aufgespreizt wird.

4. Verfahren nach einem der Ansprüche 1- 3, **dadurch gekennzeichnet, daß** das Ringelement (34) die Form eines Toroids besitzt.

5. Verfahren nach einem der Ansprüche 1 - 4, **dadurch gekennzeichnet, daß** das Ringelement (34) aus einem duktilen Werkstoff besteht, insbesondere aus 20 MoCrS4 oder einem ähnlichen Werkstoff.

6. Verfahren nach einem der Ansprüche 1 - 5, **dadurch gekennzeichnet, daß** die Umfangsnut (30) mittels eines einzelnen Werkzeuges gleichzeitig mit einem Freistich (26) am gegenüberliegenden Ende der Umfangsverzahnung (20, 22) eingestochen wird.

7. Verfahren nach einem der Ansprüche 1 - 6, **dadurch gekennzeichnet, daß** das Zahnrad (12) und der Kupplungskörper (14) gehärtet werden, bevor sie miteinander verbunden werden.

## Claims

1. Method of manufacturing a transmission part (1) having a gearwheel (12) and a coupling body (14), in which the gearwheel (12) and the coupling body (14) are connected to one another coaxially and in a rotationally fixed manner by means of a circumferential tooth system (20, 22), so that they bear against one another free of play at respective radial shoulders (18, 19), one of the components of gearwheel (12) or coupling body having a circumferential groove (30) in or adjacent to the circumferential tooth system (20, 22) in a region opposite the radial shoulders (18, 19), in which circumferential groove (30) a ring element (34) made of a ductile material is caulked for axial locking,
**characterized in that**
the ring element (34) is first of all inserted into the circumferential groove (30), so that it is captively held therein, and **in that** the ring element (34) is then caulked against the component (14) not having the circumferential groove (30) by means of a caulking tool (36).

2. Method according to Claim 1, **characterized in that** the ring element (34), when it is captively held in the circumferential groove (30), also captively holds the gearwheel (12) and the coupling body (14) against one another before the ring element (34) is caulked.

3. Method according to Claim 1 or 2, **characterized in that** the ring element (34) is an open ring element (34) which is expanded for inserting into the circumferential groove (30).

4. Method according to one of Claims 1 to 3, **characterized in that** the ring element (34) has the shape of a toroid.

5. Method according to one of Claims 1 to 4, **characterized in that** the ring element (34) is made of a ductile material, in particular of 20 MoCrS4 or a similar material.

6. Method according to one of Claims 1 to 5, **characterized in that** the circumferential groove (30) is recessed by means of an individual tool at the same time as an undercut (26) at the opposite end of the circumferential tooth system (20, 22).

7. Method according to one of Claims 1 to 6, **characterized in that** the gearwheel (12) and the coupling body (14) are hardened before they are connected to one another.

## Revendications

1. Procédé de fabrication d'un élément de transmission (10) comportant une roue dentée (12) et un corps d'accouplement (14), dans lequel la roue dentée (12) et le corps d'accouplement (14) sont reliés coaxialement et solidairement en rotation l'un à l'autre au moyen d'une denture périphérique (20, 22), de sorte qu'ils s'appliquent l'une contre l'autre sans jeu sur des épaulements radiaux (18, 19) respectifs, l'un des composants de la roue dentée (12) ou du corps d'accouplement présentant, dans une zone opposée aux épaulements radiaux (18, 19) dans ou au voisinage de la denture périphérique (20, 22), une rainure périphérique (30) dans laquelle un élément annulaire (34) en un matériau ductile est maté pour le blocage axial,
**caractérisé en ce que**
l'élément annulaire (34) est introduit d'abord dans la rainure périphérique (30) de manière à y être maintenu de façon imperdable, et **en ce que** l'élément annulaire (34) est maté ensuite, au moyen d'un outil de matage (36), contre le composant (14) ne présentant pas la rainure périphérique (30).

2. Procédé selon la revendication 1, **caractérisé en ce que** l'élément annulaire (34), lorsqu'il est maintenu de façon imperdable dans la rainure périphérique (30), maintient aussi de façon imperdable l'une contre l'autre la roue dentée (12) et le corps d'accouplement (14), avant que l'élément annulaire (34) ne soit maté.

3. Procédé selon la revendication 1 ou 2, **caractérisé en ce que** l'élément annulaire (34) est un élément annulaire ouvert (34) qui est écarté pour être introduit dans la rainure périphérique (30).

4. Procédé selon l'une des revendications 1 à 3, **caractérisé en ce que** l'élément annulaire (34) possède la forme d'un toroïde.

5. Procédé selon l'une des revendications 1 à 4, **caractérisé en ce que** l'élément annulaire (34) est constitué d'un matériau ductile, en particulier en 20 MoCrS4 ou d'un matériau similaire.

6. Procédé selon l'une des revendications 1 à 5, **caractérisé en ce que** la rainure périphérique (30) est rectifiée en plongée au moyen d'un seul outil avec en même temps un dégagement (26) sur l'extrémité opposée de la denture périphérique (20, 22).

7. Procédé selon l'une des revendications 1 à 6, **caractérisé en ce que** la roue dentée (12) et le corps d'accouplement (14) sont trempés, avant d'être reliés l'un à l'autre.
